# FASCICULE DE BREVET EUROPEEN

(11) **EP 1 688 590 B1**
(45) Date de publication et mention de la délivrance du brevet: **12.03.2008**
(21) Numéro de dépôt: 06100295.2
(22) Date de dépôt: 12.01.2006
(51) Int. Cl.: F01D 17/16, F01D 9/06, F02C 9/18

(54) **Dispositif de prélèvement d'air sur une aube pivotante de stator de machine**
Vorrichtung zur Luftentnahme in einer drehbaren Schaufel eines Machinengehäuse
Device for air extraction in a pivotable blade of a stator of a machine

(30) Priorité: 14.01.2005 FR 0550123
(43) Date de publication de la demande: 09.08.2006
(73) Titulaire: SNECMA, 75015 Paris (FR)
(72) Inventeur: Aubin, Stéphan Yves, 94200 Charenton le Pont (FR); Earith, Thomas Julien, Roland, 77250, Veneux les Sablons (FR); Escure, Didier René, André, 77176, Nandy (FR); Obrecht, Thierry Jean-Jacques, 77000, Melun (FR); Rousselin, Stéphane, 77850, Hericy (FR)
(74) Mandataire: Poulin, Gérard

(56) Documents cités:
- FR-A- 2 433 106
- US-A- 2 720 356
- US-A- 5 472 314
- US-A- 5 517 817
- US-A- 5 795 128
- US-A- 5 941 537

## Description

Le sujet de cette invention est le prélèvement d'air réalisé sur une aube pivotante de stator de turbomachine.

De nombreuses turbomachines comprennent des aubes de stator à montage pivotant, afin de modifier les caractéristiques de redressement des gaz selon les régimes de la machine. Les spécialistes disent que le calage des aubes est variable. Il est assuré par un mécanisme de commande entourant le stator et comprenant généralement un anneau de commande auquel sont articulées des bielles dont les extrémités opposées sont en prise avec des portions extrêmes de pivots des aubes qui s'étendent hors du stator. La rotation de l'anneau autour du stator produit un basculement des bielles et le pivotement des aubes autour de l'axe du pivot.

Il est aussi connu d'aspirer des gaz à la surface d'aubes. Une telle disposition est normalement appliquée à des aubes de compresseur pour aspirer la couche limite et augmenter de cette façon le taux de compression. L'aspiration s'effectue par des canaux creusés dans les aubes et débouchant à leur surface, et l'air est récupéré et réinjecté dans une autre portion de la machine. Quoique ce procédé soit connu depuis des dizaines d'années, il a cependant été surtout proposé pour des aubes à calage fixe, qui autorisent à construire les canaux d'aspiration également fixes. Des solutions satisfaisantes au problème d'étanchéité rencontré en appliquant un système d'aspiration à des aubes à calage variable, nécessairement ajustées avec un jeu à travers le carter du stator, sont proposées dans cette description.

On citera pourtant le document US-A-5 795 128 où des aubes pivotantes sont munies d'un système d'aspiration d'air comprenant un collecteur couvrant les extrémités extérieures des pivots et dans lequel les perçages d'aspiration creusés au centre des pivots débouchent. Cette conception impose un collecteur appliqué sur le stator à l'endroit des aubes, ce qui est une contrainte d'aménagement qu'il n'est pas toujours possible de respecter. Un inconvénient de cette conception est dû aux bielles de commande, qui traversent le collecteur et nécessitent un moyen d'étanchéité particulier.

Le document FR-A- 2 433 106 décrit un système analogue, sauf que le collecteur est construit dans le carter, devant les portions centrales des pivots des aubes. La gêne associée à l'interférence entre les bielles de commande et le collectuer disparaît, mais les contraintes d'aménagement sont encore plus grandes. L'écoulement d'air est soumis à des variations de direction et de section brusques qui induisent des pertes de charge importantes.

Le document US-A-5 472 314 décrit enfin un système où l'aube comprend une partie pivotante au bord d'attaque, une partie fixe au bord de fuite, et une partie souple intermédiaire ; l'air transite par la partie fixe et la partie souple entre l'extérieur du carter et la partie pivotante. Cette conception originale est coûteuse et compliquée.

L'invention est ainsi relative à un dispositif comprenant un étage d'aube de stator à calage variable, les aubes étant munies chacune d'un pivot s'étendant à travers le stator et comprenant une portion extrême s'étendant hors du stator, caractérisé en ce qu'il comprend un système de prélèvement d'air comprenant un collecteur entourant le stator, des raccordements au collecteur prolongeant respectivement les portions extrêmes des pivots de façon étanche, et des canaux creusés dans les pivots et des faces des aubes.

La disposition des raccordements au collecteur prolongeant les portions extrêmes des pivots en s'étendant autour d'eux fait que les canaux creusés dans les pivots et qui traversent le stator débouchent directement dans les raccordements au collecteur sans discontinuité ni perte de charge de l'écoulement. Des joints d'étanchéité disposés entre les raccordements et les pivots réduisent les fuites à un débit faible.

La conception des aubes et de l'ensemble du dispositif reste simple, et le collecteur peut être placé à un endroit quelconque où il ne gêne pas, à côté des pivots des aubes ou autour d'eux.

On doit cependant s'assurer que les jonctions entre les raccordements au collecteur et les portions extrêmes des pivots ne nuisent pas aux pivotements des aubes ni ne produisent d'usure excessive qui augmenterait les fuites de façon inadmissible. Dans une première réalisation de l'invention, les raccordements au collecteur comprennent des tuyaux souples. Un mode de liaison particulièrement simple aux pivots des aubes consiste à disposer des écrous tournant librement autour du bout du tuyau et joints aux bouts des tuyaux par des butées, les portions extrêmes des pivots étant filetées pour recevoir les écrous des raccordements. Il suffit alors de visser les écrous aux extrémités des pivots pour serrer les bouts des tuyaux contre les faces d'extrémité des pivots, des joints étant favorablement disposés aux jonctions. Les filetages peuvent être les mêmes que ceux qui sont utilisés pour monter les écrous de butée contre le stator et qui retiennent les pivots des aubes en les empêchant de glisser dans leur logement.

Une réalisation possible avec des tuyaux résistants dans une telle application consiste à les fabriquer en tresse métallique munie d'un revêtement intérieur d'un polymère tel que le tétrafluoroéthylène (Téflon). Le problème d'un raccordement mécanique étanche entre un collecteur immobile et des pivots mobiles placés à une position quelconque par rapport à lui est ainsi résolu.

L'étanchéité peut être complétée si les tuyaux sont munis de soufflets d'étanchéité pénétrant dans les canaux creusés dans les pivots. Les soufflets masquent les jonctions entre les pivots et les tuyaux souples et renforcent l'efficacité des joints d'étanchéité.

Dans un autre genre de réalisations, on renonce aux tuyaux souples. Les raccordements des pivots d'aube au collecteur sont alors assurés par des pièces tubulaires, appelées ici canons rigides, prolongeant les pivots et solidaires du collecteur. Cette conception permet de soutenir le collecteur par les pivots des aubes par l'entremise des canons rigides, éventuellement sans qu'il faille employer d'autre moyen de liaison du collecteur au carter. Le collecteur placé à distance du carter ne gêne pas l'aménagement de celui-ci. Le montage est rendu possible, dans une conception particulière, si le collecteur et les raccordements sont composés de deux moitiés assemblées par un joint, s'étendant dans le plan ou le cône des axes de pivotement des aubes.

Dans une conception particulière, les raccordements comprennent des douilles composées de deux moitiés disjointes enserrant les portions extrêmes des pivots. Un ajustement serré des pivots est alors réalisé, avec une modération du serrage permettant de ne pas nuire au pivotement.

Dans un autre genre de réalisations, où les raccordements comprennent toujours des canons rigides solidaires du collecteur, on trouve en outre des pivots de prolongement prolongeant les pivots des aubes, creusés de canaux prolongeant les canaux des pivots des aubes, des moyens d'entraînement en rotation liant les pivots de prolongement aux pivots des aubes, et des paliers et des joints d'étanchéité entre les canons et les pivots de prolongement. Cette construction plus compliquée a l'avantage d'offrir une meilleure étanchéité grâce à une précision d'assemblage plus grande. Les pivots de prolongement peuvent comprendre des épaulements de maintien axial en butée sur les canons, le collecteur étant alors composé de deux parties assemblées et concentriques. Une cohésion plus grande du dispositif est alors offerte.

L'invention sera maintenant décrite en liaison aux figures suivantes : la figure 1 est une vue générale d'un dispositif conforme à l'invention, la figure 2 une vue des portions plus spécialement originales du dispositif, et les figures 3 et 4 représentent deux autres réalisations possibles de l'invention.

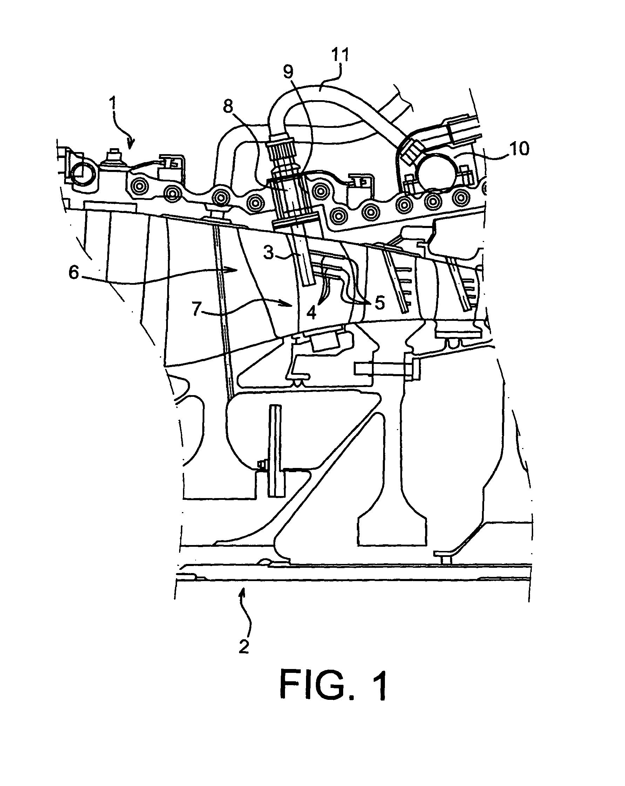

Se reportant à la figure 1, il y est représenté partiellement une turbomachine dont la veine annulaire de circulation des gaz, délimitée par un stator 1 et un rotor 2 concentriques, est occupée alternativement par des étages d'aubes fixes, liées au stator 1, et mobiles, liées au stator 2. Certains étages d'aubes, appartenant par exemple au compresseur à haute pression, sont creusés de canaux d'aspiration dont la forme générale peut être comparée à celle d'un peigne et qui comprennent un canal principal 3 d'aspiration, creusé dans l'aube en direction sensiblement radiale, et d'affluents 4 creusés sensiblement axialement dans l'aube et qui débouchent à sa surface en un point d'aspiration 5. Les canaux principaux 3 débouchent devant des systèmes d'aspiration dont la plupart ne seront pas décrits en détail et qui sont inclus à l'intérieur du rotor 2 ou du stator 1 selon le cas. La description portera ici sur un étage 6 d'aubes fixes particulier, où les aubes 7 ont un calage variable et comprennent des pivots 8 traversant le stator 1 et qui lui sont liés par des paliers 9. Les canaux principaux des aubes 7 traversent les pivots 8. Un collecteur 10 circulaire aspire l'air d'écoulement aspiré à la face extérieure du stator 1, par des raccordements 11 se branchant respectivement aux extrémités des canaux principaux 3 sur les portions extrêmes des pivots 8.

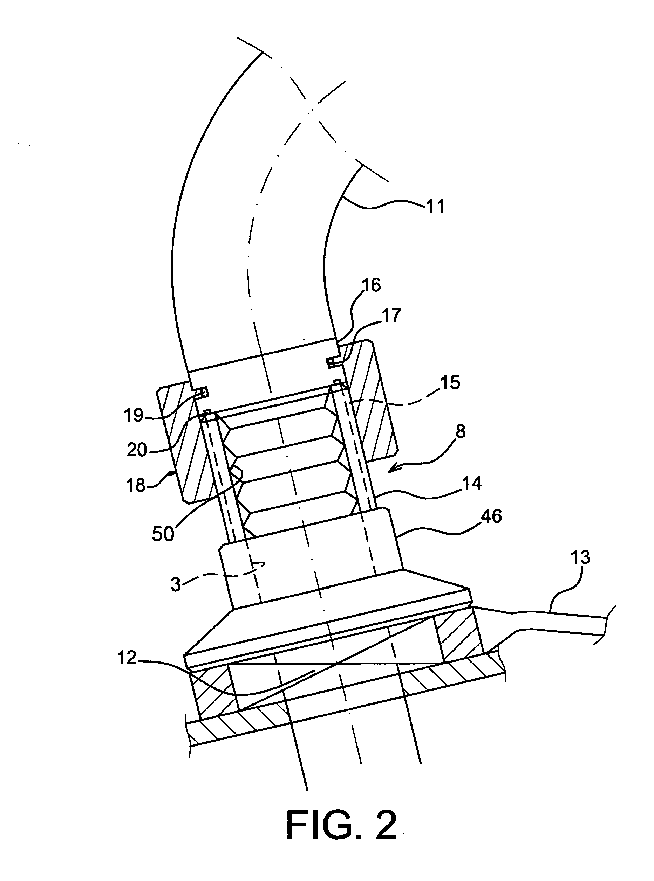

La figure 2 illustre l'agencement à cet endroit. Les pivots 8 sont munis, à l'extérieur du stator 1, de portions de prise 12, de section généralement carrée, de bielles 13 de commande du calage des aubes 7 (qui ne sont qu'esquissées) et de parties filetées 14 sur lesquelles s'engagent des écrous 46 qui retiennent les pivots 8 en les empêchant de glisser dans leurs paliers 9. Des freins d'arrêt en rotation, non représentés ici, maintiennent les écrous 46 à des positions fixes sur les portions filetées 14. Conformément à l'invention, les pivots 8 sont prolongés vers l'extérieur de portions extrêmes 15 destinées à la jonction avec les raccordements 11. Dans la réalisation présente, ceux-ci sont des tuyaux souples dont les extrémités de raccordement portent chacune une bague 16 creusée d'une gorge 17. Des écrous 18 présentent des faces d'extrémité munies de collerettes 19 retenues dans les gorges 17 et permettant une rotation libre des écrous 18 autour des extrémités des raccordements 11. Les jonctions s'effectuent en vissant les écrous 18 sur les portions extrêmes 15 filetées des pivots 8 jusqu'à ce que les faces planes d'extrémité des raccordements 11 et des pivots 8 se touchent par l'entremise de joints d'étanchéité 20. Les canaux principaux 3 débouchent alors dans les raccordements 11. L'étanchéité est favorablement complétée par des soufflets 50 engagés dans les bouts des canaux principaux 3 et dont les plis extérieurs touchent leur paroi de façon à limiter le débit d'air parvenant aux joints 20. Il a été trouvé que des raccordements 11 assez souples en torsion et résistants à la fatigue mécanique produite par les pivotements des aubes 7, ainsi qu'à la chaleur de l'air prélevé, étaient obtenues en les construisant en tresse métallique revêtue intérieurement d'un polymère tel que le tétrafluoroéthylène. Les soufflets 50 peuvent eux aussi être composés de tétrafuoroéthylène.

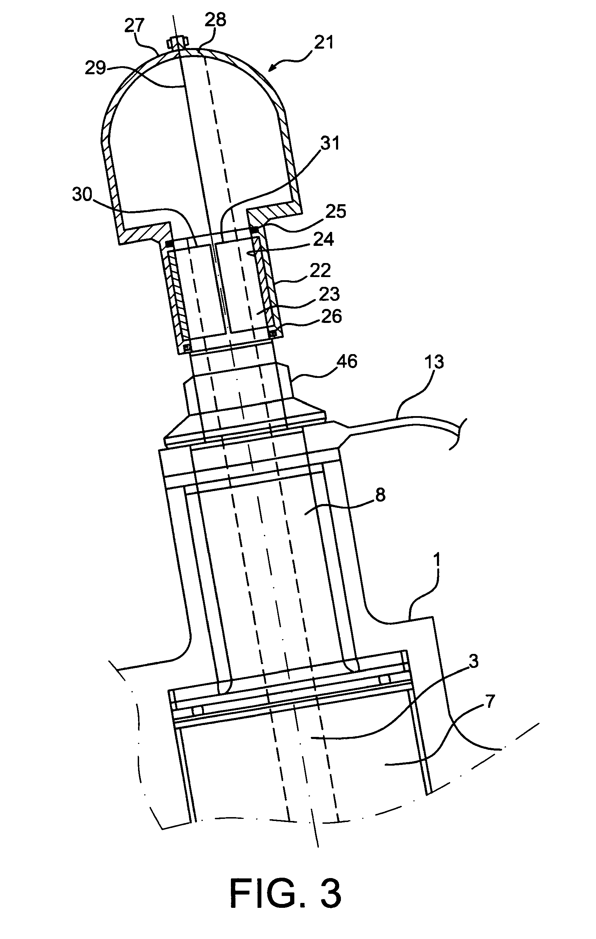

Une conception quelque peu différente est représentée à la figure 3. Elle se distingue de la précédente surtout par l'absence de tuyau souple pour composer les raccordements au collecteur. De plus, le collecteur boulonné au stator est remplacé par un collecteur 21 s'étendant dans le prolongement des axes des pivots 8. Le collecteur 21 est solidaire de canons 22 de forme tubulaire dirigés vers les pivots 8 et qui viennent à entourer leurs portions extrêmes 23. La liaison est complétée par des douilles 24 retenues dans des gorges creusées dans la face intérieure des canons 22 et servant de paliers entre les canons 22 et les portions extrêmes 23. Des joints d'étanchéité 25 et 26, disposés aux deux extrémités des douilles 24, retenus dans d'autres gorges des canons 22 et frottant sur les portions extrêmes 23, améliorent l'étanchéité du dispositif. Les canaux principaux 3 débouchent presque directement dans le collecteur 21. Un avantage de cette conception est qu'on renonce aux raccordements 11 souples qui constituent des éléments fragiles du dispositif d'aspiration et occupent un volume assez important à la surface du stator 1. Enfin, le collecteur 21 n'est pas retenu par le stator 1 mais par les pivots 8. Un montage à la fois facile et suffisamment rigide peut être réalisé si le collecteur 21 et les canons 22 sont composés de deux moitiés 27 et 28 sensiblement symétriques et assemblées entre elles par un joint 29 passant par le plan ou le cône des axes de rotation des pivots 8. L'assemblage s'effectue par des brides 29 et 30 établies sur les bords externes et internes des moitiés 27 et 28. L'étanchéité au joint 29 est rétablie par l'addition d'une matière durcissante. De plus, les douilles 24 sont aussi formées de deux moitiés 30 et 31 disjointes dont les limites sont proches du joint 29. Quand le collecteur 21 et les canons 22 sont assemblés, les moitiés 30 et 31 des douilles 24 sont approchées les unes des autres et exercent un ajustement légèrement serré sur les portions extrêmes 23 des pivots 8, ce qui produit une bonne cohésion du dispositif sans s'opposer véritablement aux rotations des pivots 8. Ce dispositif convient que les portions extrêmes 23 des pivots 8 soient filetées ou non. Si cette réalisation du dispositif est d'une grande simplicité et d'un petit encombrement, il faut reconnaître que l'étanchéité est moins bonne.

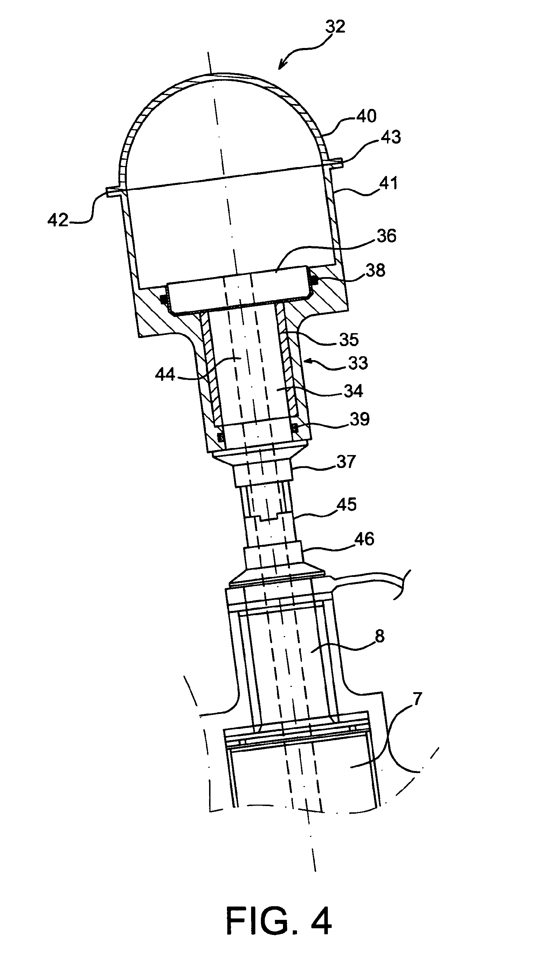

Un perfectionnement possible de ce genre de réalisation est proposé d'après la figure 4. Le collecteur 32 de cette réalisation a une forme analogue à celle du collecteur 21 mais sa constitution est un peu différente, comme on le verra plus loin. Il comporte encore des canons 33 analogues aux canons 22 mais dont la structure est unitaire. Une différence essentielle est que les canons 33 logent des pivots de prolongement 34, qui y tournent par l'intermédiaire de paliers 35 et y sont retenus par des épaulements 36 aux extrémités disposées du côté du collecteur 32 et par des écrous 37 du côté des pivots 8, à peu près comme les pivots 8 sont montés sur le stator 1. Les pivots 8 et les pivots de prolongement 34 sont mis en alignement et montés les uns sur les autres, les pivots de prolongement 34 s'ajustant autour des portions extrêmes des pivots 8. Des canaux 44 centraux, traversant des pivots de prolongement 34, prolongent les canaux 3 des pivots 8 des aubes 7 et débouchent dans le collecteur 32. L'entraînement en rotation des pivots de prolongement 34 par les pivots 8 s'effectue par des crénelages 45 qui les unissent. Les douilles 35 et les canons 22 étant unitaires, l'étanchéité est beaucoup mieux assurée par des joints 38 et 39 placés de chaque côté des douilles 35 de façon analogue à la réalisation précédente. Le collecteur 32 reste composé de deux portions 40 et 41 assemblées par des brides opposées 42 et 43, mais le joint est perpendiculaire aux axes de rotation des pivots 8, une des portions 40 est une portion externe et l'autre 41 est une portion interne comprenant les canons 33, et les brides 42 et 43 sont disposées sur les faces latérales du collecteur 32.

## Revendications

1. Dispositif comprenant un étage (6) d'aubes (7) de stator à calage variable, les aubes étant munies chacune d'un pivot (8) s'étendant à travers le stator et comprenant une portion extrême s'étendant hors du stator (1), et un système de prélèvement d'air, **caractérisé en ce que** ledit système comprend un collecteur (10, 21, 32) entourant le stator, des raccordements (11) au collecteur prolongeant respectivement les portions extrêmes des pivots de façon étanche, et des canaux (3, 4, 5) creusés dans les pivots et des faces des aubes.

2. Dispositif selon la revendication 1, **caractérisé en ce que** les raccordements au collecteur comprennent des tuyaux souples (11) et des écrous (18) tournant librement autour de bouts des tuyaux et joints auxdits bouts des tuyaux par des butées axiales (17, 19), les portions extrêmes des pivots sont filetées pour recevoir les écrous (18) des raccordements et des écrous de montage (15) des aubes sur le stator, et des joints d'étanchéité (20) sont disposés entre les bouts des tuyaux souples et les pivots.

3. Dispositif selon la revendication 2, **caractérisé en ce que** les tuyaux sont composés de tresse métallique et d'un revêtement intérieur de polymère.

4. Dispositif selon la revendication 2, **caractérisé en ce que** les tuyaux sont munis de soufflets d'étanchéité (50) pénétrant dans les canaux (3) creusés dans les pivots.

5. Dispositif selon la revendication 1, **caractérisé en ce que** le collecteur (21, 32) s'étend dans un plan ou un cône des pivots des aubes, les raccordements sont des canons rigides (22) prolongeant les pivots, le collecteur et les raccordements sont solidaires et composés de deux parties (27) assemblées par un joint (29) passant par ledit plan ou ledit cône, et des joints d'étanchéité sont disposés entre les raccordements et les portions extrêmes des pivots.

6. Dispositif selon la revendication 5, **caractérisé en ce que** les raccordements comprennent des douilles (24) composées de deux parties (30, 31) disjointes enserrant les portions extrêmes des pivots.

7. Dispositif selon la revendication 1, **caractérisé en ce que** les raccordements comprennent des canons rigides (33) solidaires du collecteur (32) et des pivots de prolongement (34) prolongeant les pivots (8) des aubes (7), creusés de canaux (44) prolongeant les canaux des pivots des aubes, des moyens d'entraînement en rotation (45) liant les pivots de prolongement aux pivots des aubes, et des paliers (35) et des joints d'étanchéité (38, 39) entre les canons et les pivots de prolongement.

8. Dispositif selon la revendication 7, **caractérisé en ce que** les pivots de prolongement comprennent des épaulements (36) de maintien axial en butée sur les canons, et le collecteur est composé de deux portions (40, 41) assemblées et concentriques.

## Claims

1. Device comprising a stage (6) of stator blades (7) with variable setting, the blades each being fitted with a pivot (8) passing through the stator and including an end portion extending outside the stator (1), and an air bleed system, **characterized in that** said system comprises a header pipe (10, 21, 32) surrounding the stator, connections (11) to the header pipe prolonging the corresponding end portions of the pivots in a leaktight manner, and ducts (3, 4, 5) hollowed out in the pivots and the faces of the blades.

2. Device according to claim 1, **characterized in that** connections to the header pipe include flexible pipes (11) and nuts (18) free to rotate about the ends of the pipes and connected to the said ends of the pipes through axial stops (17, 19), the end portions of the pivots are threaded to hold the connection nuts (18) and nuts (15) for assembling blades on the stator, and seals (20) are arranged between the ends of the flexible pipes and the pivots.

3. Device according to claim 2, **characterized in that** the pipes are made of a metallic braid and an inside coating of a polymer.

4. Device according to claim 2, **characterized in that** the pipes are provided with sealing bellows (50) penetrating the ducts (3) hollowed out in the pivots.

5. Device according to claim 1, **characterised in that** the header pipe (21, 32) extends in a plane or in a cone of the blade pivots, connections are rigid barrels (22) prolonging the pivots, the header pipe and the connections are fixed together and are composed of two parts (27) assembled using a seal (29) passing through the said plane or the said cone, and seals are arranged between the connections and the end portions of the pivots.

6. Device according to claim 5, **characterised in that** connections include bushings (24) composed of two separate parts (30, 31) surrounding the end portions of the pivots.

7. Device according to claim 1, **characterised in that** connections include rigid barrels (33) fixed to the header pipe (32) and prolonging pivots (34) extending the pivots (8) of the blades (7), in which ducts (44) are hollowed out prolonging the blade pivot ducts, rotation drive means (45) connecting the prolonging pivots to the blade pivots, and bearings (35) and seals (38, 39) between the barrels and the prolonging pivots.

8. Device according to claim 7, **characterised in that** the prolonging pivots include axial support shoulders (36) stopping in contact on the barrels, and the header pipe is composed of two concentric assembled portions (40, 41).

## Patentansprüche

1. Vorrichtung, die eine Stufe (6) von verstellbaren Statorschaufeln (7) umfasst, wobei die Schaufeln jeweils mit einem Drehzapfen (8) versehen sind, der durch den Stator hindurch verläuft und einen Endabschnitt aufweist, der sich aus dem Stator (1) heraus erstreckt, und die ein System zur Luftentnahme umfasst,
**dadurch gekennzeichnet,**
**dass** dieses System eine Sammelleitung (10, 21, 32), die den Stator umgibt, Anschlussleitungen (11) zu der Sammelleitung, die jeweils die Endabschnitte der Drehzapfen unter Dichtigkeit verlängern, sowie Kanäle (3, 4, 5), die durch Aushöhlung in den Drehzapfen und den Seiten der Schaufeln gebildet sind, umfasst.

2. Vorrichtung nach Anspruch 1,
**dadurch gekennzeichnet,**
**dass** die Anschlussleitungen zu der Sammelleitung aus Schläuchen (11) sowie aus Muttern (18) bestehen, die sich mittels axialer Anschläge (17, 19) frei um Endstücke der Schläuche und Dichtungen an diesen Endstücken der Schläuche drehen, die Endabschnitte der Drehzapfen Gewinde tragen, um die Muttern (18) der Anschlussleitungen sowie Montagemuttern (15) zur Befestigung der Schaufeln an dem Stator aufzunehmen, und Dichtungen (20) zwischen den Endstücken der Schläuche und den Drehzapfen angeordnet sind.

3. Vorrichtung nach Anspruch 2,
**dadurch gekennzeichnet,**
**dass** die Schläuche aus Metallgeflecht und einer Innenbeschichtung aus Polymer gebildet sind.

4. Vorrichtung nach Anspruch 2,
**dadurch gekennzeichnet,**
**dass** die Schläuche mit Dichtungsmanschetten (50) versehen sind, die in die in den Drehzapfen ausgeführten Kanäle (3) eindringen.

5. Vorrichtung nach Anspruch 1,
**dadurch gekennzeichnet,**
**dass** die Sammelleitung (21, 32) sich in einer Ebene oder einer Kegelfläche der Drehzapfen der Schaufeln erstreckt, die Anschlussleitungen starre Rohre (22) in der Verlängerung der Drehzapfen sind, die Sammelleitung und die Anschlussleitungen fest miteinander verbunden sind und aus zwei Teilen (27) gebildet sind, die durch eine Dichtung (29) zusammengefügt werden, welche durch diese Ebene oder diese Kegelfläche verläuft, und Dichtungen zwischen den Anschlussleitungen und den Endabschnitten der Drehzapfen angeordnet sind.

6. Vorrichtung nach Anspruch 5,
**dadurch gekennzeichnet,**
**dass** die Anschlussleitungen Hülsen (24) aufweisen, die aus zwei voneinander abgetrennten Teilen (30, 31) gebildet sind, die die Endabschnitte der Drehzapfen umfassen.

7. Vorrichtung nach Anspruch 1,
**dadurch gekennzeichnet,**
**dass** die Anschlussleitungen starre Rohre (33) aufweisen, die fest mit der Sammelleitung (32) verbunden sind, sowie Verlängerungsdrehzapfen (34) aufweisen, die die Drehzapfen (8) der Schaufeln (7) verlängern und in denen durch Aushöhlung Kanäle (44) gebildet sind, die die Kanäle der Drehzapfen der Schaufeln verlängern, sowie Drehmitnehmermittel (45) aufweisen, die die Verlängerungsdrehzapfen mit den Drehzapfen der Schaufeln verbinden, sowie Lager (35) und Dichtungen (38, 39) zwischen den Rohren und den Verlängerungsdrehzapfen aufweisen.

8. Vorrichtung nach Anspruch 7,
**dadurch gekennzeichnet,**
**dass** die Verlängerungsdrehzapfen Absätze (36) für einen axialen Halt in Anlage an den Rohren aufweisen und die Sammelleitung aus zwei miteinander verbundenen, konzentrischen Teilen (40, 41) gebildet ist.
